(19) **Europäisches Patentamt / European Patent Office / Office européen des brevets**

(11) **EP 4 563 669 A1**

(12) **EUROPEAN PATENT APPLICATION**
published in accordance with Art. 153(4) EPC

(43) Date of publication:
04.06.2025 Bulletin 2025/23

(21) Application number: 23846564.5

(22) Date of filing: 26.07.2023

(51) International Patent Classification (IPC):
$C09J\ 7/28^{(2018.01)}$    $C09J\ 133/04^{(2006.01)}$
$C09J\ 163/00^{(2006.01)}$    $C09J\ 167/00^{(2006.01)}$
$C09J\ 175/04^{(2006.01)}$    $C09J\ 201/00^{(2006.01)}$
$C23C\ 26/00^{(2006.01)}$    $H01F\ 1/147^{(2006.01)}$
$H01F\ 1/18^{(2006.01)}$    $H01F\ 27/24^{(2006.01)}$
$H01F\ 41/02^{(2006.01)}$

(52) Cooperative Patent Classification (CPC):
C09J 7/28; C09J 133/04; C09J 163/00;
C09J 167/00; C09J 175/04; C09J 201/00;
C23C 26/00; H01F 1/147; H01F 1/18; H01F 27/24;
H01F 41/02

(86) International application number:
PCT/JP2023/027379

(87) International publication number:
WO 2024/024834 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.07.2022 JP 2022118786

(71) Applicant: NIPPON STEEL CORPORATION
Chiyoda-ku
Tokyo 100-8071 (JP)

(72) Inventors:
• ARAMAKI, Takashi
Tokyo 100-8071 (JP)
• SUZUKI, Yuki
Tokyo 100-8071 (JP)
• OISHI, Hiroshi
Tokyo 100-8071 (JP)

(74) Representative: Vossius & Partner
Patentanwälte Rechtsanwälte mbB
Siebertstrasse 3
81675 München (DE)

(54) **ADHESIVE RESIN COMPOSITION-COATED ELECTROMAGNETIC STEEL SHEET AND METHOD FOR MANUFACTURING SAME**

(57) An adhesive resin composition-coated electrical steel sheet including a steel sheet, and adhesive resin composition coating on at least one surface of the steel sheet, wherein the adhesive resin composition coating is a semi-cured material of an adhesive resin composition consisting of an adhesive resin at least partly including a thermosetting resin, and a curing agent, maximum penetration $\lambda$ of the adhesive resin composition coating at 100 to 300°C measured by thermomechanical analysis described in JIS K 7196:2012 is 3% or more and less than 100%, and a part of the curing agent exists in the adhesive resin composition coating in a crystalline state, and polarization-resolved light scattering intensity I of the adhesive resin composition coating is $1.00 \times 10^7$ to $50.00 \times 10^7$.

EP 4 563 669 A1

**Description**

TECHNICAL FIELD

The present invention relates to an adhesive resin composition-coated electrical steel sheet and a method for producing same.

BACKGROUND ART

An iron core used for a motor and the like is assembled by punching and shearing electrical steel sheets into a predetermined shape, and thereafter laminating and bonding them. As a bonding method, a method of bonding with a thermosetting adhesive is known that can perform bonding without giving processing distortion or heat distortion, can provide insulation between laminated steel sheets to increase eddy current resistance and reduce iron loss, and is also excellent in heat resistance under actual usage environment.

A common method of laminating and bonding electrical steel sheets with a thermosetting adhesive is a method of punching/shearing electrical steel sheets and thereafter laminating and thermal-compression bonding them. In addition, a method of applying a thermosetting adhesive to a surface of an electrical steel sheet can be broadly divided into two types, depending on the timing of application of the thermosetting adhesives.

One is a method of applying the thermosetting adhesive to an electrical steel sheet after punching processing. This method is further divided into a method of spraying the thermosetting adhesive on a surface of an electrical steel sheet with a sprayer or the like immediately before shearing, and thereafter performing punching and laminating, and a method of immersing laminated iron cores in an adhesion liquid to allow the adhesion liquid to penetrate between laminated electrical steel sheets, after completion from punching to shearing/laminating.

The other is a method of applying/drying the thermosetting adhesive on at least one surfaces of electrical steel sheets in advance, punching and shearing them, and thereafter laminating them. Hereinafter, an electrical steel sheet with an adhesion resin composition coating obtained by applying and drying a thermosetting adhesive on at least one surface of the electrical steel sheet may be called an "adhesive resin composition-coated electrical steel sheet".

Among these methods of laminating and bonding electrical steel sheets, the latter has attracted attention in recent years because it is excellent in handling, uniformity, productivity, and the like of adhesives application.

In the latter method, first, adhesive resin composition-coated electrical steel sheets (semi-finished product) with adhesive resin composition coating in a semi-cured state, i.e., the curing reaction of the thermosetting adhesive applied on surfaces of electrical steel sheets is stopped midway, are obtained. Then, using this, iron cores (products) are produced. The adhesive resin composition-coated electrical steel sheet is produced by applying/heating a thermosetting adhesive based on a mixture of a thermosetting adhesive resin and a curing agent on a surface of a wide electrical steel sheet. The produced adhesive resin composition-coated electrical steel sheet is wound into a coil and stored. Further, the adhesive resin composition-coated electrical steel sheet may be rewound from the coil and slit to a punching width, and thereafter wound again into a coil and stored again.

Iron cores are produced by punching, shearing, laminating, and thermal-compression bonding adhesive resin composition-coated electrical steel sheets. Therefore, not only the technique of uniformly coating a steel sheet surface with the adhesive resin composition coating, but also the technique of preventing defects, such as poor peeling of steel sheets at the time of winding into a coil and unwinding from the coil, and insufficient adhesive force after thermal-compression bonding.

It should be noted that, generally, the steps from the application of the thermosetting adhesive at the time of producing the adhesive resin composition-coated electrical steel sheets to the thermal-compression bonding at the time of producing iron cores is not continuous. Accordingly, the producing steps of adhesive resin composition-coated electrical steel sheets (semi-finished products) include storing/transportation steps between the completion of drying and the starting of punching. Further, the storage period may be very long, spanning several months or more. In addition, steel sheets may be stocked for several weeks in a hold that is exposed to a high temperature and humid environment of about 50°C during transportation. During this storage period, the adhesive resin composition coatings of adhesive resin composition-coated electrical steel sheets are in a semi-cured state (non-equilibrium state) in which the curing reaction, which is an irreversible reaction, is stopped midway.

Therefore, adhesive resin composition-coated electrical steel sheets are very instable. Accordingly, when stored for a long period of time under a high temperature and humid environment after application/drying of the adhesive, defects such as the following (A) and (B) may occur. Note that, under a high temperature and humid environment means, for example, under an environment in a warehouse of a vessel sailing near the equator, and under an environment with a storage temperature of about 50°C.

(A) Adhesion blocking: the curing reaction of the adhesive resin advances between adhesive resin composition coating surfaces during a storage period, and adhesive bonding occurs between the laminated and stored steel sheets.

(B) Deterioration of adhesion ability: the curing of adhesive resin composition coating excessively advances in the storage period. As a result, since the adhesive resin is not sufficiently softened even if heated for thermal-compression bonding, and the adhesive resin cannot penetrate into unevenness of surfaces of adherends, anchor effects cannot be developed, and the adhesion ability between laminated steel sheets is deteriorated.

Therefore, the technique of controlling the curing state of an adhesive resin to solve instability has been disclosed. Patent Document 1 discloses the technique of coating an electrical steel sheet with an adhesive resin for coating an electrical steel sheet and having a Tg (glass transition temperature) or softening temperature of 60°C or more. By vitrifying the adhesive resin near room temperature, stickiness on a surface of an adhesion layer can be prevented, and adhesive blocking can be prevented. This technique is effective in a case where iron cores are produced by punching/thermal-compression bonding adhesive resin composition-coated electrical steel sheets immediately after drying.

In addition, Patent Documents 2 to 4 disclose the techniques of suppressing the curing reaction at room temperature by using a latent curing agent as a curing agent for a thermosetting resin. Here, a latent curing agent is, for example, a curing agent to which latent properties are added as explained in Non-Patent Document 1. With the latent properties of the curing agent, the reaction at room temperature can be suppressed, and the curing reaction of the thermosetting resin can be rapidly advanced by giving a stimulus trigger from the outside, such as heat, light, humidity, or pressure.

Furthermore, Patent Documents 5 and 6 suggest that blocking during storage can be prevented by coating electrical steel sheets with an adhesive resin that is cured by a potential curing agent.

LIST OF PRIOR ART DOCUMENTS

PATENT DOCUMENT

Patent Document 1: JP2002-260910A
Patent Document 2: JP2020-100727A
Patent Document 3: JP2017-031268A
Patent Document 4: JP2014-152236A
Patent Document 5: JP6-182296A
Patent Document 6: JP11-162724A

NON PATENT DOCUMENT

Non-Patent Document 1: Journal of Japan Adhesion Society, vol. 53, No. 4 (2017), pp. 122-128

SUMMARY OF INVENTION

TECHNICAL PROBLEM

However, Patent Document 1 does not disclose a method of suppressing the curing reaction of an adhesive resin composition-coated electrical steel sheet during storage. With the method in Patent Document 1, there is a possibility that blocking due to adhesion occurs in general producing of the adhesive resin composition-coated steel sheet involving a long-term storage, and further, the adhesion ability at the time of thermal-compression bonding may be reduced.

Although Patent Documents 2 to 4 disclose the techniques (adhesive liquid storage stabilization and longer pot life) of suppressing the reaction between a resin and a curing agent in an adhesive liquid before being applied to a steel sheet as much as possible, and maintaining an easy-to-apply viscosity even during storage of the adhesive, there is no disclosure on the stability of the adhesive resin of the adhesive resin composition-coated electrical steel sheet that has passed a heating step by drying.

Patent Documents 5 and 6 do not disclose about the state of a potential curing agent in an adhesive resin after heating and drying. The curing agent once heated in a drying step changes the state and loses latency in many cases. Therefore, when the state of the potential curing agent in the adhesive resin composition coating after drying is not controlled, it is difficult to suppress progress of the curing reaction during storage, and there have been cases where blocking due to adhesion and deterioration of adhesion ability occur.

Further, the diffusion of the curing agent into the adhesive resin and the reaction with adhesive resin occurring on the order of several months at room temperature correspond to those on the order of several minutes at a curing temperature in many cases. Therefore, when the diffusion rate of the curing agent into the adhesive resin in the adhesive resin composition coating of the adhesive resin composition-coated electrical steel sheet, or the reaction rate with the adhesive resin is reduced, there have been cases where the curing rate in a thermal-compression bonding step at the time of producing iron cores using this is also reduced, and the productivity of iron cores is reduced.

As aforementioned, generally, the producing steps from the application of a thermosetting adhesive at the time of producing the adhesive resin composition-coated electrical steel sheet (semi-finished product) to the thermal-compression bonding at the time of producing iron cores (product) are not continuous. Accordingly, during the period after obtaining the adhesive resin composition-coated electrical steel sheet (from the completion of drying of the adhesive) to the start of punching, the adhesive resin composition coating is stored in a half-cured (non-equilibrium) state where the curing reaction, which is an irreversible reaction, is stopped halfway. As a result, prevention of blocking and adhesion ability deterioration during storage (particularly, during long-term storage) have been problems. In addition, in the thermal-compression bonding step at the time of producing iron cores using the adhesive resin composition-coated electrical steel sheets, it has also been necessary to be able to perform curing in a short period of time, and to be able to efficiently produce iron cores.

The present invention has been made in view of such circumstances, and an objective of the present invention is to provide an adhesive resin composition-coated electrical steel sheet capable of preventing adhesion blocking and deterioration of adhesion ability even if stored for a long period of time after application/drying of an adhesive, and capable of curing adhesive resin composition coating in a short period of time in a thermal-compression bonding step at the time of producing iron cores.

SOLUTION TO PROBLEM

The present invention has been made to solve the above-described problems, and the gist of the present invention is the following adhesive resin composition-coated electrical steel sheet and a method for producing the same.
(1) An adhesive resin composition-coated electrical steel sheet including a steel sheet, and adhesive resin composition coating on at least one surface of the steel sheet,

wherein the adhesive resin composition coating is a semi-cured material of an adhesive resin composition consisting of an adhesive resin at least partly including a thermosetting resin, and a curing agent,
maximum penetration $\lambda$ of the adhesive resin composition coating at 100 to 300°C measured by thermomechanical analysis described in JIS K 7196:2012 is 3% or more and less than 100%, and
a part of the curing agent exists in the adhesive resin composition coating in a crystalline state, and polarization-resolved light scattering intensity I of the adhesive resin composition coating is $1.00 \times 10^7$ to $50.00 \times 10^7$.

(2) The adhesive resin composition-coated electrical steel sheet according to (1) described above,
wherein the polarization-resolved light scattering intensity I of the adhesive resin composition coating is $1.20 \times 10^7$ to $18.00 \times 10^7$.
(3) The adhesive resin composition-coated electrical steel sheet according to (1) or (2) described above,
wherein a softening start temperature Tss of the adhesive resin composition coating measured by thermomechanical analysis described in JIS K 7196:2012 is 50°C or more, and a maximum penetration $\lambda$ at 100 to 300°C is 15% or more.
(4) The adhesive resin composition-coated electrical steel sheet according to any of (1) to (3) described above,
wherein the thermosetting resin contains one or more selected from epoxy resin, acrylic resin, urethane resin, and unsaturated polyester resin.
(5) The adhesive resin composition-coated electrical steel sheet according to any of (1) to (4) described above,
wherein the curing agent contains one or more selected from an amine curing agent, an amide curing agent, and an imidazole curing agent.
(6) A method for producing the adhesive resin composition-coated electrical steel sheet according to any of (1) to (4) described above, the method including:

an application step of applying a liquid thermosetting adhesive including the adhesive resin and the curing agent to at least one surface of the steel sheet; and
a heating, drying, and solidification step of forming an adhesive resin composition coating on the surface of the steel sheet by heating and thereafter cooling the steel sheet applied with the thermosetting adhesive,
wherein heating temperature in the heating, drying, and solidification step is a temperature T within a temperature range of 100 to 250°C, and
a heating time in the heating, drying, and solidification step satisfies Formula (i) below:

$$0.8 \leq t/t_0 \leq 18.0 \ ... \ (i),$$

note that meaning of each sign in Formula (i) above is as follows:

t: the heating time in the heating, drying, and solidification step; and
$t_0$: time required to form the adhesion resin composition coating whose softening start temperature is 50°C when the thermosetting adhesive is dried at the temperature T.

(7) The method for producing the adhesive resin composition-coated electrical steel sheet according to (6) described above,

wherein a glass transition temperature $Tg_{uc}$ of the adhesive resin is 30°C or more,
the heating temperature in the heating, drying, and solidification step is the temperature T in a temperature range of 100 to 180°C, and
the heating time in the heating, drying, and solidification step satisfies Formula (ii) below:

$$1.3 \leq t/t_0 \leq 15.0 \ ... \ (ii)$$

note that meaning of each sign in Formula (ii) above is as follows:

t: the heating time in the heating, drying, and solidification step; and
$t_0$: time required to form the adhesion resin composition coating whose softening start temperature is 50°C when the thermosetting adhesive is dried at the temperature T.

(8) The method for producing the adhesive resin composition-coated electrical steel sheet according to (6) or (7) described above,
wherein the adhesive resin contains 50 mass percent or more of one or more thermosetting resins selected from epoxy resin, acrylic resin, urethane resin, and unsaturated polyester resin, with respect to a total amount of the adhesive resin.
(9) The method for producing the adhesive resin composition-coated electrical steel sheet according to any of (6) to (8),
wherein the curing agent contains one or more selected from an amine curing agent, an amide curing agent, and an imidazole curing agent.

ADVANTAGEOUS EFFECTS OF INVENTION

According to the present invention, an adhesive resin composition-coated electrical steel sheet which is capable of preventing adhesion blocking and deterioration of adhesion ability even if stored for a long period of time after application/drying of an adhesive, and capable of curing adhesive resin composition coating in a short period of time at the time of thermal-compression bonding can be obtained.

BRIEF DESCRIPTION OF DRAWINGS

[Figure 1] Figure 1 is a diagram for illustrating a measuring method of polarization-resolved light scattering intensity I of adhesive resin composition coating.
[Figure 2] Figure 2 is a diagram for illustrating an analyzing method of softening start temperature Tss and maximum penetration λ of the adhesive resin composition coating.

DESCRIPTION OF EMBODIMENTS

Hereinafter, the details of the present invention will be explained in the order of the point of view, specific embodiments based on this, and usage. However, the explanation of constituent elements described below is an example (representative example) of an embodiment of the present invention, and the present invention is not limited to the following content, unless the gist thereof is changed.

<Point of View of Present Invention>

(Control Guidelines)

The present inventors performed the following study in order to solve the above-described problems.

When an adhesive resin composition-coated steel sheet is stored for a long period of time (for example, in units of months) under a high temperature and humid environment, a curing agent will be diffused in an adhesive resin in adhesive resin composition coating, and a slow curing reaction (hereinafter referred to as "slow curing reaction") will advance within the adhesive resin composition coating. Accordingly, when the slow curing reaction within the adhesive resin composition coating during storage is not suppressed, it is difficult to prevent occurrence of adhesion blocking and deterioration of adhesion ability due to excessive curing of the adhesive resin composition coating. On the other hand, when the reaction rate of the curing reaction of the adhesive resin composition coating is made too slow, the curing reaction will not advance in a short period of time at the time of thermal-compression bonding. As a result, the productivity of iron cores is reduced.

Accordingly, in order to prevent adhesion blocking and deterioration of adhesion ability during storage, the present inventors focused on and studies the following points.

1) Elementary processes of slow curing reaction

First, when a slow curing reaction within an adhesive resin composition coating of an adhesive resin composition-coated electrical steel sheet during storage is decomposed into elementary steps, the elementary processes will be the following three processes.

(a) Dissolution of the curing agent
(b) Diffusion of the curing agent into the adhesive resin
(c) Collision/reaction with adhesive resin molecules of the curing agent

Therefore, in order to suppress progress of the slow curing reaction within the adhesive resin composition coating of the adhesive resin composition-coated electrical steel sheet during storage, it is necessary to reduce any one of the dissolution rate, diffusion rate, and reaction activity of the curing agent.

In the present invention, in view of the following points, (a) dissolution of the curing agent is suppressed, and the slow curing reaction is inhibited. Specifically, the slow curing reaction was inhibited by using a curing agent that partially crystallize at room temperature, and making a certain amount of the curing agent in a crystalline state (hereinafter may be referred to as "curing agent crystal") remain in the adhesive resin composition coating.

First, the disadvantages of inhibiting the slow curing reaction while focusing on (b) and (c) are as follows.

In order to inhibit (b) diffusion of the curing agent into the adhesive resin and (c) collision/reaction with adhesive resin molecules of the curing agent, so as to suppress the slow curing reaction within adhesive resin composition coating, suppression of thermal mobility of adhesive resin phase molecules and increased activation energy for curing reaction at room temperature are required in each case. However, in the former, the crystallization temperature or glass transition temperature (Tg) of the adhesive resin must be increased. As a result, the diffusion of the curing agent becomes slow also at the time of thermal-compression bonding, and thermal-compression bonding at high temperature is required. In addition, in the latter, in many cases, at the same time, the curing reaction rate of the adhesive resin composition coating at the time of thermal-compression bonding also becomes slow, and the productivity of iron cores is impaired.

On the other hand, the advantages of focusing on (a), and making a certain amount of the curing agent remain in the crystalline state are as follows.

Since (a) dissolution of the curing agent can be controlled by the change of state of the curing agent, and the crystallization of the curing agent and the change of state of dissolution are thermodynamically reversible, when properly heated/cooled at the time of heating, drying, and solidification, even if crystals are dissolved by heating, the crystals can be precipitated. Also, the crystallized curing agent is stabilized without dissolving at room temperature, and can exist in the adhesive resin composition coating. Accordingly, by making a certain amount of the curing agent remain in the crystalline state in the adhesive resin composition coating coated on the electrical steel sheet, it is possible to stably suppress the slow curing reaction. In addition, since the solubility can be controlled independently from the thermal mobility and reaction activity of adhesive resin phase molecules, even if the control as aforementioned is applied to these for short-time curing at the thermal-compression bonding step, the slow curing reaction can be stably inhibited at the time of storage.

Next, specific embodiments will be described.

<Adhesive Resin Composition-coated Electrical Steel Sheet>

The present invention relates to an adhesive resin composition-coated electrical steel sheet including a steel sheet, and adhesive resin composition coating on at least one surface of the steel sheet, wherein the adhesive resin composition coating is a semi-cured material of an adhesive resin composition consisting of an adhesive resin at least partly including a thermosetting resin, and a curing agent, maximum penetration $\lambda$ of the adhesive resin composition coating at 100 to 300°C measured by thermomechanical analysis described in JIS K 7196:2012 is 3% or more and less than 100%, a part of the curing agent exists in the adhesive resin composition coating in the crystalline state, and polarization-resolved light scattering intensity I of the adhesive resin composition coating is $1.00 \times 10^7$ to $50.00 \times 10^7$ (hereinafter may be described as "the adhesive resin composition-coated electrical steel sheet of the present invention").
With such a configuration, the following effects can be obtained during storage and in each step at the time of thermal-compression bonding of the adhesive resin composition-coated electrical steel sheet of the present invention.
The following effects can be obtained during storage.

- Prevention of adhesion ability deterioration/adhesion blocking:

Since a certain amount of the curing agent exists in the adhesive resin composition coating in the crystalline state that is difficult to dissolve in the adhesive resin, it is possible to prevent the curing agent from dissolving into the adhesive resin during the storage period of the adhesive resin composition-coated electrical steel sheet. As a result, the curing agent can be prevented from diffusing and moving in the adhesive resin composition coating, the interface between the adhesive resin composition coating and a steel sheet, and the interface between the adhesive resin composition coating in a case where adhesive resin composition-coated electrical steel sheets are superimposed by winding the adhesive resin composition-coated electrical steel sheets into a coil or the like. Accordingly, the slow curing reaction within the adhesive resin composition coating and the reaction between the adhesive resin composition coating and an adherend during storage can be inhibited, and adhesion ability deterioration and adhesion blocking can be prevented.
The following effects can be obtained in the thermal-compression bonding step.

- Short-time curing of the adhesive resin composition coating at the time of thermal-compression bonding:

By dissolving, at the time of thermal-compression bonding, the curing agent remaining in the crystalline state during storage, diffusion into the adhesive resin is facilitated, and curing of the adhesive resin composition coating in a short period of time is enabled. Further, dissolution of the curing agent is inhibited by being maintained in the crystalline state to suppress the slow curing reaction within the adhesive resin composition coating during storage. Therefore, combined use with a catalyst and/or an accelerator that facilitate reaction activation energy is also possible, and these may be added to achieve both the short-time curing of the adhesive resin composition coating at the time of thermal-compression bonding, and the inhibition of the slow curing reaction within the adhesive resin composition coating during the storage period of the adhesive resin composition-coated electrical steel sheets.
Note that use of the catalyst and/or the accelerator that facilitate reaction activation energy is not essential.

[Steel Sheet]

The steel sheet (may be described as "the electrical steel sheet") except for the adhesive resin composition coating in the adhesive resin composition-coated electrical steel sheet of the present invention is not particularly limited, and a known steel sheet is applicable.

[Adhesive Resin Composition Coating]

The adhesive resin composition coating is a layer formed on at least one surface of a steel sheet, and is a semi-cured material of the adhesive resin composition consisting of the adhesive resin and the curing agent. Since the adhesive resin composition coating consisting of the semi-cured material of the thermosetting adhesive resin composition can exhibit adhesion ability when heated and pressurized, adhesive resin composition-coated electrical steel sheets can be bonded together by laminating and thermal-compression bonding the adhesive resin composition-coated electrical steel sheets.

[Adhesive Resin Composition]

The adhesive resin composition consists of the adhesive resin at least partly including the thermosetting resin, and the curing agent. The adhesive resin composition in the adhesive resin composition coating is in a semi-cured state in which curing has partially advanced.

[Adhesive Resin]

The adhesive resin at least partly includes the thermosetting resin in order to exhibit thermosetting properties. As described above, the adhesive resin composition consists of the adhesive resin at least partly including the thermosetting resin, and the curing agent. Accordingly, the adhesive resin refers to the component excluding the curing agent (unreacted curing agent) from the adhesive resin composition. The thermosetting resin is a three-dimensional polymer crosslinking and curing resin when heated at the time of use, and when catalytic action is also added in some cases. In the adhesive resin composition coating, a part of the thermosetting resin undergoes a crosslinking reaction with the curing agent, and the rest exists in an unreacted state.

[Curing Agent]

The curing agent included in the adhesive resin composition is a compound that reacts with functional groups contained in the thermosetting resin, forms a three-dimensional structure, and cures the adhesive resin composition, and is at least partially crystallized at room temperature. That is, a part of the curing agent exists in the adhesive resin composition coating in the crystalline state. The curing agent used in the present invention may include a curing agent that can be crystallized at room temperature, and a part of which can exist in the crystalline state in the adhesive resin composition coating, and only a curing agent that can be crystallized at room temperature may be used, or a curing agent that can be crystallized at room temperature and a curing agent that is not crystallized at room temperature may be used together. Note that the curing agent in the adhesive resin composition coating refers to an unreacted curing agent component that has not reacted with the thermosetting resin.

In the present invention, whether or not a part of the curing agent exists in the adhesive resin composition coating in the crystalline state is specified by using a polarization microscope. Since the curing agent crystal has optical anisotropy, it becomes bright when observed through polarizing filters arranged in crossed Nicols. On the other hand, since the adhesive resin is optically isotropic, it becomes dark. Accordingly, by using this difference, the adhesive resin phase consisting mainly of the adhesive resin other than the curing agent crystal, and the curing agent crystal can be separated. Specifically, the adhesive resin composition coating coated on a steel sheet is observed with a polarization microscope in a cross-section parallel to a steel sheet surface. More specifically, a microscope produced by Olympus Corporation: BX53M or an upright microscope LV150N produced by Nikon Corporation can be listed as a polarization microscope.

Polarizing filters (for example, U-AN 360-3, U-POTP3, or the like produced by Olympus Corporation) are set in crossed Nicols, and is observed by 100 to 800x. Note that the magnification can be appropriately selected within the range, according to the ease of identification of a curing agent crystal image. Then, when a bright phase is observed, it is determined that a part of the curing agent exists in the adhesive resin composition coating in the crystalline state.

[Semi-cured Material]

The adhesive resin composition forming the adhesive resin composition coating is a semi-cured material in which curing has partially advanced. The semi-cured material is the adhesive resin composition in a state where curing has not advanced to 100%. In the present invention, whether or not it is in the semi-cured state is determined by using the maximum penetration, which will be described later, as an index. Specifically, when the maximum penetration measured by the thermomechanical analysis described in JIS K 7196:2012 is 3% or more and less than 100%, it is determined to be in the semi-cured state.

[Amount of Curing Agent in Crystalline State in Adhesive Resin Composition Coating]

The adhesive resin composition-coated electrical steel sheet of the present invention includes a certain amount of the curing agent (curing agent crystal) in the crystalline state in the adhesive resin composition coating. The preferable range of the residual amount of the curing agent crystal in the adhesive resin composition coating can be specified with the light scattering intensity utilizing the optical anisotropy of the curing agent crystal, that is, polarization-resolved light (Hv) scattering intensity I. In the adhesive resin composition-coated electrical steel sheet of the present invention, the polarization-resolved light scattering intensity (amount of light) I of the adhesive resin composition coating is $1.00 \times 10^7$ to $50.00 \times 10^7$.

Here, the polarization-resolved light scattering intensity I of the adhesive resin composition coating is a value obtained by measuring a polarization-resolved light scattering intensity measured value $I_0$ (an integral value of the amount of light from 0° to 22° scattering angle) of a cover glass (for example, a cover glass No. 1 manufactured by Matsunami Glass Ind., Ltd.) having a thickness of 0.15 mm and ultrasonically cleaned with detergent for 5 minutes or more, and standardizing the polarization-resolved light scattering intensity measured value $I_1$ of the adhesive resin composition coating by $I_0$, that is, $I=I_1/I_0$.

When the polarization-resolved light scattering intensity I is less than $1.00 \times 10^7$, almost all the curing agent is dissolved/diffused and the slow curing reaction during storage cannot be suppressed, and it becomes impossible to cure the adhesive resin composition coating in a short period of time at the time of thermal-compression bonding. On the other hand, when the polarization-resolved light scattering intensity I is more than $50.00 \times 10^7$, since the reaction rate of the curing reaction of the adhesive resin composition coating is too slow, the curing reaction will not advance in a short period of time at the time of thermal-compression bonding. In addition, although the polarization-resolved light scattering intensity I becomes excessive also in a case where an excessive curing agent is added, in this case, there is a possibility that the strength and toughness of the adhesive resin composition coating are decreased.

From a viewpoint of more positively securing the adhesion blocking resistance and achieving the curing in a short period of time, the polarization-resolved light scattering intensity I of the adhesive resin composition coating is preferably $1.05 \times 10^7$ to $25.00 \times 10^7$, more preferably $1.20 \times 10^7$ to $18.00 \times 10^7$.

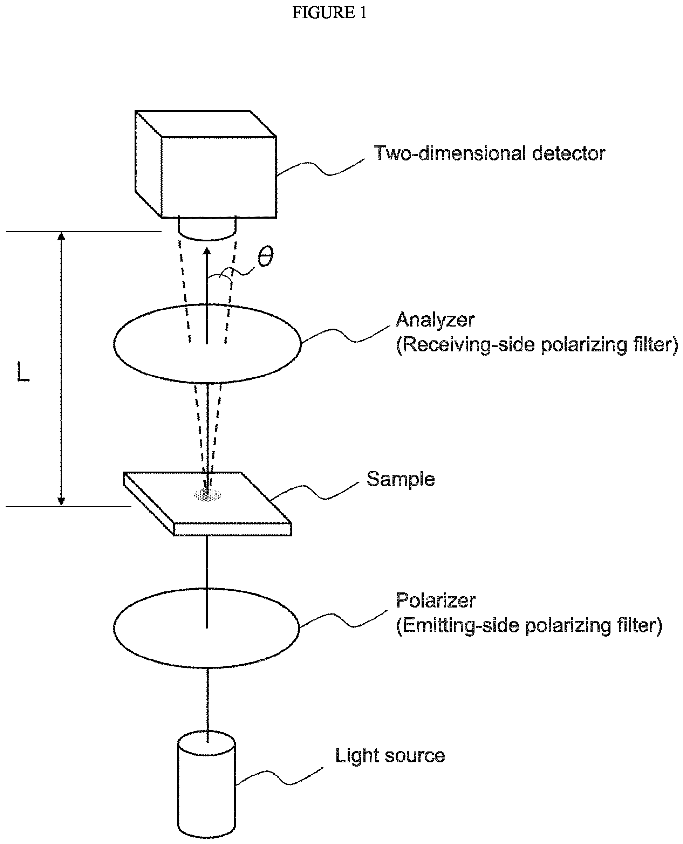

The polarization-resolved light scattering intensity I of the adhesive resin composition coating can be measured by peeling the adhesive resin composition coating from the steel sheet, and using a known light scattering intensity measurement method, specifically, a light scattering measurement apparatus equipped with a CCD camera (for example, PP-1000 produced by Otsuka Electronics Co., Ltd., or the like) that can use He-Ne laser ($\lambda$=632.8 nm) as a light source, and can set polarizing filters in crossed Nicols. Figure 1 is a diagram for illustrating a measuring method of the polarization-resolved light scattering intensity I of the adhesive resin composition coating. As illustrated in Figure 1, the amount of light of a predetermined scattering angle ($\theta$) can be measured by setting the adhesive resin composition coating, which is a sample, between an emitting-side polarizing filter and a receiving-side polarizing filter, and adjusting a distance (L) between the sample and a two-dimensional detector (CCD camera).

As a specific method of peeling the adhesive resin composition coating from the steel sheet, there is a method in which the adhesive resin composition-coated electrical steel sheet is immersed in liquid that dissolves steel sheets, for example, acid such as hydrochloric acid or nitric acid adjusted to a concentration that does not affect the adhesive resin composition coating, or alkaline liquid such as sodium hydroxide. Then, the steel sheet is dissolved and the adhesive resin composition coating on a surface is peeled from the steel sheet. Alternatively, a steel sheet portion may be mechanically cut and peeled. Here, affecting the adhesive resin composition coating refers to changing the quality of the adhesive resin composition coating by dissolving the curing agent crystal, or decomposing the adhesive resin. The method is not limited to these as long as peeling is possible without affecting the adhesive resin composition coating as described above.

When the components and composition of the adhesive resin composition coating, and further, the conditions of application/heating, drying, and solidification steps with respect to a steel sheet are given, a cast film of the adhesive resin composition to which the same thickness as a steel sheet coating, and the same injection amount of heat as the heating, drying, and solidification step are given may be made, and the polarization-resolved light scattering intensity I of this cast film may be used instead.

[Softening Start Temperature Tss and Maximum Penetration $\lambda$]

The adhesive resin composition coating preferably has a softening start temperature Tss measured in a penetration mode of a thermomechanical analysis apparatus (TMA) according to JIS K 7196:2012 of 50°C or more, and the maximum penetration $\lambda$ at 100 to 300°C of 15% or more. The adhesive resin composition coating that satisfies such softening start temperature and maximum penetration $\lambda$ is in a state where curing has moderately advanced, and the following effects can be obtained.

By setting the softening start temperature Tss to 50°C or more, it is possible to prevent the adhesive blocking during storage of the obtained adhesive resin composition-coated electrical steel sheet, and to further increase the effects of adhesion blocking suppression and deterioration suppression of adhesion ability. Although the upper limit of the softening start temperature Tss is not particularly limited, 100°C or less is preferable. When the softening start temperature Tss is more than 100°C, since the adhesive resin composition coating is hard even in a semi-cured state, the diffusion rate of the curing agent into the adhesive resin in the thermal-compression bonding step may be slow, and curing in a short period of time may be difficult. Alternatively, since thermal-compression bonding at a high temperature of more than 250°C is required in the thermal-compression bonding step, heating/cooling may take a long time and the productivity may be reduced.

By setting the maximum penetration $\lambda$ to 15% or more, it is possible to further prevent excessive curing of the adhesive resin composition coating, and to obtain the adhesive resin composition coating that can be more easily softened at the time of thermal-compression bonding.

In order to sufficiently soften the adhesive resin composition coating at the time of thermal-compression bonding, the maximum penetration $\lambda$ is preferably 30% or more, more preferably 60% or more. In addition, when the maximum penetration $\lambda$ is more than 95%, since the curing degree of the adhesive resin composition coating may be too low, the adhesive resin composition coating may be soft, and the adhesive resin composition may flow out at the time of thermal-compression bonding, it is desirable to set the upper limit of the maximum penetration $\lambda$ to 95% or less, more preferably 80% or less.

Therefore, the adhesive resin composition coating has preferably the maximum penetration $\lambda$ of 15 to 95% and the softening start temperature Tss of 50 to 100°C, more preferably the maximum penetration $\lambda$ of 30 to 90% and the softening start temperature Tss of 50 to 100°C, still more preferably the maximum penetration $\lambda$ of 60 to 80% and the softening start temperature Tss of 50 to 100°C.

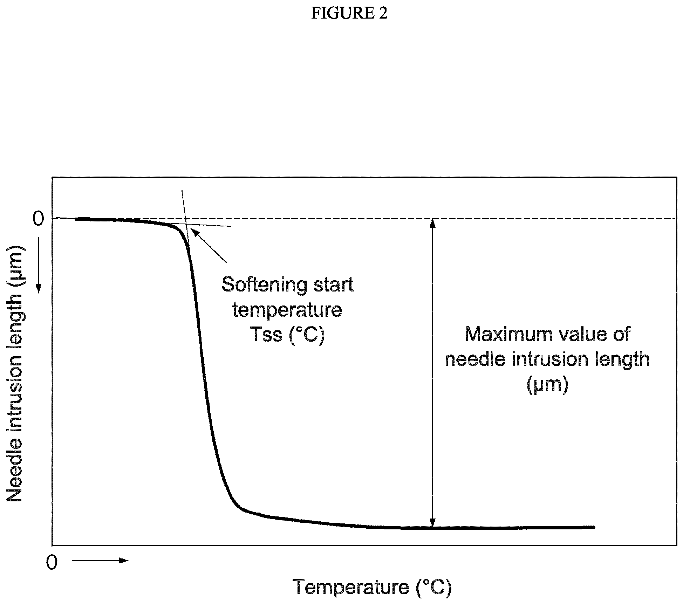

Here, the softening start temperature Tss and the maximum penetration $\lambda$ will be described. Figure 2 is a diagram for illustrating an analyzing method of the softening start temperature Tss and the maximum penetration $\lambda$ of the adhesive resin composition coating. A TMA curve illustrated in Figure 2 is a typical TMA curve of the adhesive resin composition coating in the present invention. The TMA curve can be obtained by performing measurement according to the method of JIS K 7196:2012, except for measuring the adhesive resin composition coating coated on the steel sheet. As illustrated in Figure 2, the softening start temperature Tss is defined as, in the TMA curve, the intersection point of a line obtained by extending a straight line portion on a lower temperature side at which a needle (indenter) begins intrusion to a high temperature side, and a line obtained by extending a tangential line of a portion at which the intrusion speed of the needle is maximum to the lower temperature side.

The maximum penetration $\lambda$ is defined as the percentage of the maximum value of the needle intrusion length ($\mu$m) divided by the thickness ($\mu$m) of the adhesive resin composition coating ((the maximum value of the needle intrusion length / the thickness of the adhesive resin composition coating) $\times$ 100). The maximum value of the needle intrusion length ($\mu$m) can be derived from the TMA curve as illustrated in Figure 2. Note that measurement is performed in a 100% $N_2$ atmosphere, the heating rate is 15°C/min, the pressurizing force is 0.6 to 2.0 MPa, and the diameter of a front end of the intender is 0.5 to 1.0 mm. In addition, the thickness of the adhesive resin composition coating can be measured by, for example, cutting out a cross-section of the adhesive resin composition-coated electrical steel sheet, and observing the cross-section with a microscope.

[Glass Transition Temperature Tg at the Time When Adhesive Resin is Uncured]

The glass transition temperature Tg ($Tg_{uc}$) of the adhesive resin included in the liquid thermosetting adhesive at the time when the adhesive resin is uncured, that is, before curing, is preferably 30°C or more. When $Tg_{uc}$ of the adhesive resin is less than 30°C, depending on a target softening start temperature (the glass transition temperature at the time softening is started, Tss) of the adhesive resin composition coating, in order to form the adhesive resin composition coating at the target softening start temperature (for example, 50°C or more), a large amount of heat must be input at the time of the heating, drying, and solidification after applying the adhesive to a steel sheet, and a considerable amount of the thermosetting adhesive resin composition must be cured. In order to do this, it is necessary to dissolve most of the curing agent by heating at the time of the heating, drying, and solidification and to diffuse the curing agent into the adhesive resin composition coating, and there are cases where it is difficult to make a certain amount of the curing agent remain in the adhesive resin composition coating in the crystalline state.

In addition, the $Tg_{uc}$ of the adhesive resin is preferably 80°C or less. When $Tg_{uc}$ of the adhesive resin is more than 80°C, the viscosity of the adhesive to be applied to a steel sheet is too high, and it becomes difficult to uniformly apply the adhesive.

Note that $Tg_{uc}$ of the adhesive resin can be obtained by specifying the composition (components and formulation) of the adhesive resin that coats a steel sheet with nuclear magnetic resonance or pyrolysis gas chromatography, and calculating the next formula (Fox's formula).

[Expression 1]

$$\frac{1}{Tg_{uc}} = \Sigma \frac{\omega_i}{Tg_i}$$

Here, $\omega_i$ is the blending ratio (weight ratio) of a component i, and Tgi is the glass transition temperature or softening start temperature of the component i. Tgi of each component i can be derived with a known Tg or softening start temperature measurement method, such as methods compliant with JIS K 7121:2012 and JIS K 7196:2012, by using a differential scanning calorimeter (DSC) or a thermomechanical analyzer (TMA). In addition, a known value may be adopted that is described in a product catalog literature, such as https://www.nscm.nipponsteel.com/epoxy/ec.html (as of April, 2022).

Note that, since the curing agent does not substantially vitrify and has little influence on $Tg_{uc}$ of the adhesive resin,

$Tg_{uc}$ of the adhesive resin composition may be measured, and this may be used as $Tg_{uc}$ of the adhesive resin. $Tg_{uc}$ of the adhesive resin composition may be derived with a method compliant with JIS K 7121:2012, by specifying the composition (components and formulation) of the adhesive resin composition with nuclear magnetic resonance or pyrolysis gas chromatography, making a measurement sample of the same composition, and using a differential scanning calorimeter (DSC). The measurement sample can be made with, for example, the method described in the example. Specifically, the adhesive resin composition is appropriately diluted with a solvent, and a liquid thermosetting adhesive is prepared. This liquid thermosetting adhesive is cast on a glass plate, and is thereafter vacuum dried to make a cast film. Using the cast film thus made, Tg (midpoint glass transition temperature) is measured with a method compliant with JIS K 7121:2012, and this can be used as $Tg_{uc}$ of the adhesive resin composition.

[Thermosetting Resin]

Specific examples of the thermosetting resin include cross-linked resins, such as an epoxy resin, a thermosetting acrylic resin, urethane resin, unsaturated polyester resin, phenol resin, melamine resin, urea resin, and thermosetting polyimide resin, and in the present invention, these resins can be used alone or in combination of two or more.

[Epoxy Resin]

An epoxy resin is a resin containing two or more epoxy groups, and is a resin that can be cured by crosslinking two or more epoxy groups present in the resin with a suitable curing agent to make it three-dimensional. Examples of resins containing epoxy groups include epoxy resins such as bisphenol type (bisphenol A type, bisphenol F type, bisphenol AD type), naphthalene type, and cardo skeleton.

[Thermosetting Acrylic Resin]

Examples of the thermosetting acrylic resin include copolymers of acrylic ester or methacrylate ester and acrylic monomer having reactive functional groups, such as hydroxyl group, amino group, N-methylol, N-alkoxymethyl carboxide, allyl group, and epoxy group. Specifically, examples include copolymers of methyl acrylate or methyl methacrylate and one or more acrylic monomers having reactive functional groups, such as acrylic acid, methacrylic acid, acrylamide, N-methylolacrylamide, N-(methoxymethyl) acrylamide, allyl methacrylate, acrylic glycidyl ether, and glycidyl methacrylate. The thermosetting acrylic resin can be cross-linked and cured by utilizing the self-reactivity of reactive functional groups or by reaction between the reactive functional groups and the curing agent such as an amine-based curing agent.

[Urethane Resin]

Examples of the urethane resin include resins composed of multifunctional isocyanate compounds and residues of hydroxyl-containing compounds. Specifically, examples include resins composed of aromatic polyisocyanates such as tolylene diisocyanate, diphenylmethane isocyanate, polymethylene polyphenylene polyisocyanate, aliphatic polyisocyanates such as hexamethylene diisocyanate and xylene isocyanate, or a mixture of these, and residues of hydroxyl group-containing compounds such as polyether polyols, polyester polyols, polyacrylate polyols, and polycarbonate polyols. Urethane resins can be cross-linked and cured by reaction with a curing agent, such as an isocyanate system curing agent or a polyol system curing agent.

[Unsaturated Polyester Resin]

Examples of the unsaturated polyester resin include dehydration condensation of compounds in which unsaturated dibasic acids such as maleic anhydride, fumaric acid, and itaconic acid, or a portion thereof, are replaced with saturated dibasic acids such as phthalic anhydride, isophthalic acid, and terephthalic acid, and compounds in which dihydric alcohols such as ethylene glycol, diethylene glycol, and propylene glycol, or a portion thereof are replaced with polyhydric alcohols such as glycerin and pentaerystol. The unsaturated polyester resin can be cross-linked and cured by reaction with a curing agent such as an isocyanate system curing agent.

[Other Thermosetting Resins]

Examples of the phenol resin include resins containing two or more phenols (phenol, cresol, and the like). For example, resins consisting of residues of phenols and formaldehydes or aldehydes can be listed. Specifically, phenol novolac resin, cresol novolac resin, cresol naphthol formaldehyde polycondensate, triphenylmethane type polyfunctional phenyl resin, and the like can be listed. In addition, phenolic aralkyl resin can be listed. In addition, examples of melamine resins include alkyl etherified melamine resins and substituted products thereof. Further, examples of the urea resin include ethylene urea resin. Examples of thermosetting polyimide resins include resins consisting of residues of polyvalent carboxylic dianhydride and diamine compounds. Specifically, thermosetting polyimide resins such as maleimide polymers, bismaleimide polymers, aminobismaleimide polymers, and bismaleimide triazine polymers can be listed. These resins can also be cured by a crosslinking reaction with a curing agent.

[Preferred Examples of Thermosetting Resin]

Among the thermosetting resins described above, from viewpoints that there are many options that allow the glass transition temperature $Tg_{uc}$ to be 30°C or more, the curing reaction is fast at high temperatures, and the dispersed state of the curing agent is easy to produce, the thermosetting resin preferably contains one or more selected from the group consisting of epoxy resin, acrylic resin, urethane resin, and unsaturated polyester resin. Among these, from the viewpoints of economic efficiency, versatility, and handling, the thermosetting resin most preferably contains epoxy resin.

[Preferred Examples of Adhesive Resin Included in Thermosetting Adhesive]

Preferably, the adhesive resin includes one or more thermosetting resins selected from the group consisting of epoxy resin, acrylic resin, urethane resin, and unsaturated polyester resin, and the total content thereof (the total mass of these thermosetting resins / the mass of the adhesive resin (total amount) $\times$ 100 (%)) is 50 mass percent or more. Adhesive resins containing less than 50 mass percent of these thermosetting resins may not be able to fully utilize the properties of these thermosetting resins. Among these, from the viewpoints of economic efficiency, versatility, and handling, adhesive resins containing 50 mass percent or more of epoxy resin are most preferable.

The adhesive resin may include thermosetting resin, and may consist of thermosetting resin, or may include organic or inorganic components other than the thermosetting resin. For example, thermoplastic resin; impact modifiers such as core shell rubber and natural rubber; curing accelerators such as dimethylurea, boron trifluoride, triphenylphosphine; known epoxy resin modifiers; reaction control agents (catalyst, and the like); surfactants; rust preventive agents; lubricants; antioxidants; antifoaming agents; color pigments, and the like may be included.

[Examples of Curing Agent]

Examples of the curing agent specifically include amine-based, amide-based, imidazole-based, acid anhydride-based, phenol-based, and catalyst-based curing agents. In the present invention, for example, it is possible to select, from the following specific examples, a single crystalline curing agent that crystallizes at room temperature or to select and combine two or more crystalline curing agents that crystallize at room temperature.

[Amine-based Curing Agents]

Examples of amine-based curing agents include, for example, but not limited to, aliphatic amines, aromatic amines, guanidine compounds, and the like.

[Aliphatic Amines]

Examples of aliphatic amines include, for example, but not limited to, diethylenetriamine, triethylenetetraamine, tetraethylenepentamine, m-xylene diamine, trimethylhexamethylene diamine, 2-methylpentamethylene diamine, isophoronediamine, 1,3-bisaminomethylcyclohexane, Bis(4-aminocyclohexyl)methane, norbornenediamine, 1,2-diaminocyclohexane, benzoylamine, methylcyclohexylamine, diazabicycloundecene, and the like.

[Aromatic Amines]

Examples of aromatic amines include, for example, but not limited to, diaminodiphenylmethane, m-phenylenediamine, diaminodiphenylsulfone (DDS), diethyltoluenediamine, Trimethylene bis(4-aminobenzoate), polytetramethylene oxide di-p-aminobenzoate, methylaniline, dimethylaniline, and the like.

[Guanidine Compounds]

Examples of guanidine compounds include, for example, but not limited to, dicyandiamide (DICY, cyanoguanidine) and its derivatives, methylguanidine, ethylguanidine, propylguanidine, butylguanidine, dimethylguanidine, trimethylguanidine, phenylguanidine, diphenylguanidine, tolylguanidine, and the like.

[Amide-based Curing Agents]

Examples of amide-based curing agents include, for example, but not limited to, those obtained by adding an acid anhydride to an amine-based curing agent, or hydrazide compounds.

[Hydrazide Compounds]

Examples of hydrazide compounds include, for example, but not limited to, succinic acid dihydrazide, adipic acid dihydrazide, phthalic acid dihydrazide, isophthalic acid dihydrazide, terephthalic acid dihydrazide, p-oxybenzoic acid hydrazide, salicylic acid hydrazide, phenylaminopropionic acid hydrazide, maleic acid dihydrazide, and the like.

[Imidazole-based Curing Agents]

Examples of imidazole-based curing agents include compounds of imidazole and isocyanuric acid, diamino-6-[2-(2-methyl-1-imidazolyl)ethyl]-1,3,5-triazine (2MZ-AZINE), 1-cyanoethyl-2-ethyl-4-methylimidazole (CEMI), 2-ethyl-4-methylimidazole, 2-undecylimidazole ($C_{11}Z$), and the like.

[Acid Anhydride-based Curing Agents]

Examples of acid anhydride-based curing agents include, for example, but not limited to, phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, methylhexahydrophthalic anhydride, and the like.

[Phenol-based Curing Agents]

Examples of phenol-based curing agents include, for example, but not limited to, phenol novolac resin, cresol novolac resin, phenol aralkyl resin, cresol aralkyl resin, naphthol aralkyl resin, biphenyl-modified phenolic resin, biphenyl-modified phenolic aralkyl resin, dicyclopentadiene modified phenolic resin, aminotriazine modified phenolic resin, naphthol novolac resin, naphthol-phenol cocondensation novolac resin, naphthol-cresol cocondensation novolac resin, allyl acrylic phenolic resin, and the like.

[Catalyst-based Curing Agents]

Examples of catalyst-based curing agents include, for example, but not limited to, cationic thermosetting catalyst, BF3-amine complex, 1,8-diazabicyclo[5.4.0]undec-7-ene, and the like.

Since the curing reaction rate of the adhesive resin composition coating at the time of thermal-compression bonding is fast, and it becomes possible to relatively easily cure the adhesive resin composition coating in a short period of time, the curing agent preferably includes one or more crystalline curing agents selected from the group consisting of an amine-based curing agent, an amide-based curing agent, and an imidazole-based curing agent. Especially, since it is possible to raise the temperature at which the curing reaction of the resin composition coating is most likely to proceed, it is preferable to include one or more crystalline curing agents selected from the group consisting of an aromatic amine curing agent, a guanidine compound curing agent, an amide-based curing agent, and an imidazole-based curing agent. By using such a curing agent, it is possible to create a difference between the temperature at which the adhesive resin composition-coated electrical steel sheet is stored and the heating temperature during thermal-compression bonding, and thus the heating rate at the time of thermal-compression bonding can be easily controlled. From the viewpoints of handling and versatility, the curing agent most preferably includes one or more selected from the group consisting of dicyandiamide (DICY), diaminodiphenylsulfone (DDS), and diamino-6-[2-(2-methyl-1-imidazolyl)ethyl]-1,3,5-triazine (2MZ-AZINE).

Note that, in the adhesive resin composition coating of the adhesive resin composition-coated electrical steel sheet of the present invention, the specified amount of the curing agent may exist in the crystalline state, and the types of the adhesive resin and the curing agent are not limited to the examples described above.

[Thickness of Adhesive Resin Composition-coated Electrical Steel Sheet]

The thickness of the adhesive resin composition-coated electrical steel sheet of the present invention can be set to, for example, 0.10 mm or more and 0.50 mm or less. Note that this is simply the thickness range of known adhesive resin composition-coated electrical steel sheets that are generally available, and the present invention can also be applied to adhesive resin composition-coated electrical steel sheets outside this range.

[Thickness of Adhesive Resin Composition Coating]

Although the thickness of the adhesive resin composition coating in the adhesive resin composition-coated electrical steel sheet of the present invention is not particularly limited, the thickness can be set to, for example, 2 to 10 $\mu$m. When the thickness is less than 2 $\mu$m, the adhesive resin composition coating cannot sufficiently penetrate into unevenness of surfaces of adherends, and it is difficult to develop anchor effects. When the thickness is more than 10 $\mu$m, the volume ratio of the adhesive resin composition coating that accounts for laminated iron cores may become too large, and the magnetic properties of the laminated iron cores may be deteriorated.

<Producing Method>

A description will be given of a method for producing the adhesive resin composition-coated electrical steel sheet that provides a preferable adhesive resin composition coating, and that achieves both good blocking inhibition ability and sufficient adhesion ability. Note that the method for producing the adhesive resin composition-coated electrical steel sheet of the present invention is not limited to the producing method described below.

The method for producing the adhesive resin composition-coated electrical steel sheet of the present invention can be a producing method including an adhesive application step of applying a liquid thermosetting adhesive including an adhesive resin and a curing agent to at least one surface of a steel sheet, and a heating, drying, and solidification step of forming an adhesive resin composition coating on the surface of the steel sheet by heating and thereafter cooling the steel sheet applied with the thermosetting adhesive.

[Adhesive Application Step]

The adhesive application step is a step of applying a liquid thermosetting adhesive including an adhesive resin and a curing agent to at least one surface of a steel sheet.

[Thermosetting Adhesive]

The thermosetting adhesive that can be used for producing of the adhesive resin composition-coated electrical steel sheet is liquid material including an adhesive resin and a curing agent, and according to the composition of adhesive resin composition coating (semi-cured material) to be formed, in addition to the thermosetting resin and the curing agent, thermoplastic resin; impact modifiers such as core shell rubber and natural rubber; curing accelerators such as dimethylurea, boron trifluoride, triphenylphosphine; known epoxy resin modifiers; reaction control agents (catalyst, and the like); surfactants; rust preventive agents; lubricants; antioxidants; antifoaming agents; color pigments, and the like may be included.

Although the thermosetting adhesive can be used as it is when the adhesive resin composition constituting the adhesive resin composition coating is in an uncured state and liquid, when the adhesive resin composition coating is not liquid, or when the viscosity needs to be adjusted, a solvent is added and the thermosetting adhesive is used as liquid composition including the adhesive resin composition and the solvent. As the solvent, aromatic hydrocarbon solvents such as benzene, toluene, and xylene; alicyclic hydrocarbon solvents such as cyclohexane; ketone solvents such as acetone, methyl ethyl ketone, cyclohexanone (anone), and tetrahydrofuran (THF); halogenated solvents such as methylene chloride, dichloroethane, and chloroform, and the like can be utilized.

The thermosetting adhesive can be used as the liquid consisting of the adhesive resin composition (the adhesive resin composition itself), the liquid in which the adhesive resin composition is diluted with a solvent, the liquid in which the adhesive resin composition is dispersed in an emulsion in a solvent, and the like. The thermosetting adhesive can be of a one-component type in which the adhesive resin and the curing agent are mixed at the producing stage of the thermosetting adhesive, or a two-component type in which the adhesive resin and the curing agent are separately stored and mixed immediately before application.

The viscosity of the thermosetting adhesive is preferably 100 to 1500 mPas. When the viscosity is less than 100 mPas, it is difficult to apply the adhesive resin composition coating at a predetermined thickness. On the other hand, when the viscosity is more than 1500 mPas, uniform application and application in a short period of time are difficult, thickness unevenness occurs in the width and longitudinal directions, and the productivity is further deteriorated.

The adhesive resin composition constituting the adhesive resin composition coating is as described above. From the viewpoints of versatility, cost, and diversity of performance, the thermosetting adhesive preferably contains epoxy resin. In addition, the thermosetting adhesive preferably contains 50 mass percent or more of the thermosetting resin, more preferably contains 50 mass percent or more of epoxy resin. The curing agent preferably includes one or more selected from the group consisting of an amine-based curing agent, an amide-based curing agent, and an imidazole-based curing agent. For example, a thermosetting adhesive is preferable that includes one or more selected from the group consisting of an amine-based curing agent, an amide-based curing agent, and an imidazole-based curing agent, and that contains 50 mass percent or more of epoxy resin. Although the ratio of the thermosetting resin and the curing agent may be appropriately adjusted according to the types of the thermosetting resin and the curing agent, for example, the functional group equivalent of the curing agent can be 0.8 to 1.2 relative to the functional group equivalent of the thermosetting resin.

The thermosetting adhesive is preferably a dispersion liquid in which at least a part of the curing agent is dispersed, and the particle diameter of curing agent crystal dispersed in the thermosetting adhesive is preferably 2 to 20 $\mu$m. When the particle diameter of curing agent crystal is less than 2 $\mu$m, handling is difficult, and at the same time, all the curing agent is often dissolved due to heating at the time of heating, drying, and solidification. In this case, among the dissolved curing agent, unreacted curing agent that has not reacted with the thermosetting resin due to heating does not have curing agent crystal serving as a core, and thus is difficult to recrystallize even in a supercooled state in the cooling process following the heating, drying, and solidification process. Therefore, there are cases where it is difficult to make a predetermined amount of the curing agent remain in the adhesive resin composition coating in the crystalline state. In addition, when the thickness is more than 20 $\mu$m, it is difficult to form the adhesive resin composition coating as a thin film of 10 $\mu$m or less on a surface of a steel sheet.

(Adhesive Application Method)

A specific application method of the thermosetting adhesive is appropriately selected according to the characteristics of the thermosetting adhesive, and is not particularly limited. For example, the roll coater method, the gravure coater method, the air doctor coater method, the blade coater method, the knife coater method, the rod coater method, the kiss coater method, the bead coater method, the cast coater method, the rotary screen method, an immersion coating method in which a steel sheet is coated while being immersed into a liquid thermosetting adhesive, a slot orifice coater method in which coating is performed by dropping a liquid thermosetting adhesive to a steel sheet from an orifice, and the like can be used.

Further, in addition to these, the curtain coat method, a spray coating method in which a liquid thermosetting adhesive is sprayed in a mist form using the atomizing principle, the ink-jet method, the electrodeposition coating method, and the like can be used.

[Heating, Drying, and Solidification Step]

The heating, drying, and solidification step is a step of forming the adhesive resin composition coating on a surface of a steel sheet by heating and thereafter cooling the steel sheet applied with the thermosetting adhesive. By heating, a part of the thermosetting resin and a part of the curing agent in the thermosetting adhesive applied to the surface of the steel sheet react with each other and are cured, and thus a semi-cured material of the adhesive resin composition is formed. In addition, when using the thermosetting adhesive including a solvent, by heating, a part of the thermosetting resin and a part of the curing agent react with each other and the solvent in the thermosetting adhesive evaporates, and the semi-cured material of the adhesive resin composition is formed. In addition, a part of the curing agent does not dissolve at the time of heating, or recrystallizes by cooling after heating. Accordingly, the adhesive resin composition coating in which the predetermined amount of the curing agent is dispersed in the crystalline state is formed.

(Heating Method)

As a heating (printed) method, known heating and drying (baking) methods can be adopted, and there are hot air drying, induction heating, infrared heating, vacuum heating, and the like.

As a result of the study conducted by the present inventors, it has been found that, in order to set the polarization-resolved light scattering intensity I of the adhesive resin composition coating within the range described above, control of heating (dryness) conditions, i.e., heating temperature (T) and heating time, are very important. Specifically, it is necessary to set the heating temperature to the temperature T within a temperature range of 100 to 250°C, and to control the heating time to satisfy Formula (i) below, according to the type of the thermosetting adhesive to be used.

$$0.8 \leq t/t_0 \leq 18.0 \dots (i)$$

Note that the meaning of each sign in Formula (i) is as follows.

t: heating time in the heating, drying, and solidification step
$t_0$: time required for forming the adhesive resin composition coating having the softening start temperature (Tss) of 50°C when the thermosetting adhesive is dried at the temperature T

By setting $t/t_0$ o 0.8 or more, the polarization-resolved light scattering intensity I can be set to $50.00 \times 10^7$ or less. In addition, by setting $t/t_0$ to 18.0 or less, the polarization-resolved light scattering intensity I can be set to $1.00 \times 10^7$ or more. Here, the time $t_0$ is determined as follows. That is, first, the thermosetting adhesive is applied to a surface of a steel sheet. Then, at the temperature T, heating is performed for various times, and Tss of the adhesive resin composition coating formed on the steel sheet is measured with the aforementioned method. Then, from the measurement results, the heating time required for achieving Tss=50°C at the heating temperature T is obtained, and this is set to $t_0$.

(Cooling Method)

As a cooling method after heating the steel sheet applied with the thermosetting adhesive, known cooling methods can be adopted, air cooling, water cooling, mist cooling, and laminar flow cooling can all be used together, and a part of them can also be intermittently utilized. The cooling rate is preferably 1 to 600°C. When the cooling rate is less than 1°C/minute, the curing reaction of the adhesive resin composition advances during cooling, and it may be difficult to make the predetermined amount of the curing agent crystal remain, or the adhesive resin composition coating having a maximum penetration $\lambda$ of less than 15% may be formed. On the other hand, when the cooling rate is more than 600°C/minute, the cooling rate becomes uneven depending on regions, and the thermal stress generated from the difference in linear expansion coefficient between the steel sheet and the adhesive resin may be concentrated on a region that is rapidly cooled, and the magnetic properties of the steel sheet may be deteriorated.

<Preferred Producing Method>

Further, in order to set the polarization-resolved light scattering intensity I to $1.20 \times 10^7$ to $18.00 \times 10^7$, and to more positively securing the adhesion blocking resistance and achieving the curing in a short period of time, preferably, $Tg_{uc}$ of the adhesive resin is set to 30°C or more, the heating temperature in the heating, drying, and solidification step is set to the temperature T in a temperature range of 100 to 190°C, and the heating time is controlled to satisfy Formula (ii) below, according to the type of the thermosetting adhesive to be used.

$$1.3 \leq t/t_0 \leq 15.0 \ ... \ (ii)$$

Note that the meaning of each sign in Formula (ii) is as follows.

t: heating time in the heating, drying, and solidification step
$t_0$: time required for forming the adhesive resin composition coating having the softening start temperature (Tss) of 50°C when the thermosetting adhesive is dried at the temperature T

When it is desired to set the softening start temperature Tss to 70°C or more, $t/t_0$ is preferably set to 2.0 or more, and when it is desired to set the softening start temperature Tss to 70°C or more, $t/t_0$ is preferably set to 8.0 or less. In addition, when it is desired to set the maximum penetration $\lambda$ to 20% or more, $t/t_0$ is preferably set to 8.0 or less.

<Usage>

(Storage Method of Adhesive Resin Composition-coated Electrical Steel Sheet)

Since a preferable amount of the curing agent remains in the adhesive resin composition coating in the crystalline state, the adhesive resin composition-coated electrical steel sheet of the present invention can be stored at normal temperature and normal humidity, without strictly managing temperature and humidity. Further, even when transported by ship, adhesive blocking and adhesion blocking can be prevented, and deterioration of adhesion ability can be suppressed. Accordingly, it can be stored with a known steel sheet storing method. Specifically, the adhesive resin composition-coated electrical steel sheet can be wound into a coil, or cut into sheets and laminated, and stored at normal temperature and normal humidity by being packed with paper or resin, or without being packed. When it is stored for a longer period of time, it can also be stored at low temperature in a refrigerator or a freezer.

<Producing of Iron Cores>

The adhesive resin composition-coated electrical steel sheet of the present invention can be utilized for producing of iron cores. For example, the adhesive resin composition-coated electrical steel sheet of the present invention is punched/sheared, laminated, and thereafter a laminated body is thermal compression bonded to produce iron cores. Note that an iron core may also be called an adhesion core, a motor core, and the like.

(Punching/Shearing Method)

It is possible to perform processing and laminating with known punching and shearing methods. Specifically, examples of the methods include a method in which the adhesive resin composition-coated electrical steel sheet is continuously fed into a die from the adhesive resin composition-coated electrical steel sheet wound into a coil. On this occasion, processing oil is sprayed and applied immediately before the adhesive resin composition-coated electrical steel sheet is put into the die. Then, while feeding the adhesive resin composition-coated electrical steel sheet in a die, desired shapes are sequentially punched out multiple times, and at the time point when all the desired shapes are processed, shearing is performed. Then, the sheared adhesive resin composition-coated electrical steel sheets are dropped into a receptacle of the die and laminated.

(Thermal Compression Bonding Method)

It is also possible to crimp iron cores consisting of the adhesive resin composition-coated electrical steel sheets laminated in the die, while pressurizing the iron cores, and it is also possible to pull out the iron cores consisting of the laminated adhesive resin composition-coated electrical steel sheets from the die, and put them into a heating apparatus to pressurize. A known heating method can be applied to heating. Specifically, systems such as hot air heating using heat flow of hot air such as an oven, electrical resistance heating utilizing resistance heating, low frequency/high frequency induction heating utilizing induced power, and infrared light heating such as near-infrared and far-infrared utilizing radiant heat can be adopted. Heating with a near-infrared heater is especially preferable. When heating with a near-infrared heater, the response speed of the heater is fast, and heating can be performed with high energy density, so that iron cores can be heated at high speed. As a result, it becomes relatively easy to raise the temperature of iron cores to a curing temperature, without allowing the curing of the semi-cured material of the adhesive resin composition constituting the adhesive resin composition coating to advance too much.

Hereinafter, although the present invention will be described in further detail with reference to examples, the present invention is not limited to the following examples unless the gist thereof is changed.

[Example 1]

<Specimen>

[Steel Sheet]

A non-directional electrical steel sheet having a thickness of 0.35 mm was used.

[Thermosetting Adhesive]

Table 1 shows the raw materials used for the thermosetting adhesive. In addition, Table 2 shows formulations of the adhesive resin composition. The numerical values shown in Table 2 are the respective amounts of formulation (parts by mass) of raw materials in a case where the entire epoxy resin is 100 parts by mass.

[Table 1]

# EP 4 563 669 A1

Table 1

| | Raw material | Manufacturer | Grade |
|---|---|---|---|
| Resin raw material | Phenolic novolac epoxy | Nippon Kayaku Co., Ltd. | PPN201 |
| | Cresol novolac epoxy | NIPPON STEEL Chemical & Material Co., Ltd. | YDCN-700-10 |
| | Trifunctional epoxy | ADEKA CORPORATION | EP-3950E |
| | Tetrafunctional epoxy | NIPPON STEEL Chemical & Material Co., Ltd. | YH-404 |
| | Bisphenol A-type epoxy | Mitsubishi Chemical Holdings Corporation | Epikote 828 |
| | Phenoxy resin | NIPPON STEEL Chemical & Material Co., Ltd. | YPS-007A30 |
| | | NIPPON STEEL Chemical & Material Co., Ltd. | YP-50 |
| Additive agent | Shock absorber core shell rubber | KANEKA CORPORATION | MX257 |
| Curing agent | Dicyandiamide (DICY) | ADEKA CORPORATION | EH-3636AS |
| | 4,4'-diaminodiphenylsulfone (DDS) | Wakayama Seika Holdings Co., Ltd. | SEIKACURE-S |
| | 2,4-diamino-6-[2-(2-methyl-1-imidazolyl) ethyl]-1,3,5-triazine (2MZ-AZINE) | FUJIFILM WAKO PURE CHEMICAL CORPORATION | |
| Curing accelerator | 3-(3,4-dichbrophenyl)-1,1-dimethylurea (DCMU) | HODOGAYA UPL Co.,Ltd. | T0519 |
| | Triphenylphosphine (TPP) | Tokyo Chemical Industry Co., Ltd. | T0519 |
| Solvent | Anone | UBE Corporation | |

[Table 2]

Table 2

| Adhesive resin composition | | | 1 | 2 | 3 | 4 | 5 |
|---|---|---|---|---|---|---|---|
| Resin raw material | Phenolic novolac epoxy | | 44 | 44 | 44 | 44 | 44 |
| | Cresol novolac epoxy | | 12 | 12 | 12 | 12 | 12 |
| | Trifunctional epoxy | | 10 | 10 | 10 | 10 | 10 |
| | Tetrafunctional epoxy | | 30 | 30 | 30 | 30 | 30 |
| | Bisphenol A-type epoxy | | 4 | 4 | 4 | 4 | 4 |
| | Phenoxy resin | YPS-007A30 | 40 | | 40 | 40 | 40 |
| | | YP-50 | | 40 | | | |
| Additive agent | Shock absorber core shell rubber | | 10 | 10 | | 10 | 10 |
| Curing agent | DICY | | 12 | 12 | | | 30 |
| | DDS | | | | 41 | | |
| | 2MZ-AZINE | | | | | 31 | |

18

(continued)

| Adhesive resin composition | | 1 | 2 | 3 | 4 | 5 |
|---|---|---|---|---|---|---|
| Curing accelerator | DCMU | | 2 | | | |
| | TPP | | | 2 | | |
| Uncured Tg (°C) | | 31 | 19 | 31 | 31 | 31 |

<Formulation of Adhesive Resin Composition, and Producing of Thermosetting Adhesive>

Resin raw materials, an additive agent, a curing agent, and a curing accelerator were prepared according to the composition shown in Table 2, so as to obtain an adhesive resin composition. Then, a solvent was added to the adhesive resin composition so that the solid content concentration in the liquid becomes 40 mass percent, and the blended liquid was stirred and mixed at room temperature for three hours to obtain a thermosetting adhesive. Note that the numbers of the thermosetting adhesive shown in Tables 3 to 5 corresponds to the numbers of the adhesive resin composition shown in Table 2.

<Measurement of $Tg_{uc}$>

The thermosetting adhesive was cast on a glass plate, and thereafter put to a desiccator and dried under normal pressure for 24 hours. Thereafter, it was further vacuum dried at room temperature for 48 hours, and the solvent was removed. After vacuum drying, the cast film was collected from the glass plate and heated at 5°C/ minute by differential scanning calorimeter: DSC (produced by Hitachi High-Tech Corporation), and the uncured glass transition temperature Tg (midpoint glass transition temperature) was measured compliant with JIS K 7121:2012. The results are described in Table 2.

<Example 1>

<Producing of Adhesive Resin Composition-coated Electrical Steel Sheet>

A surface of a 220 × 200 mm non-directional electrical steel sheet are cleaned with acetone, and thereafter a thermosetting adhesive 1 was applied to the surface (200 × 200 mm) of the non-directional electrical steel sheet using a roll coater (produced by Furnace, Co., Ltd.) so that the thickness after drying becomes 4.5 $\mu$m. After the application, it was dried at 140°C for 2.5 minutes, and the solvent was removed to form adhesive resin composition coating. Further, after drying, cooling water was sprayed onto the surface of the steel sheet, and it was cooled to room temperature to obtain an adhesive resin composition-coated electrical steel sheet. Here, the steel sheet temperature was measured by attaching a thermocouple to a glue margin portion of the surface of the steel sheet.

<Examples 2 to 14>

Adhesive resin composition-coated electrical steel sheets were obtained in manners similar to Example 1, except that the thermosetting adhesives and drying conditions shown in Tables 3 to 5 were used.

<Confirmation of Curing Agent in Crystalline State>

The adhesive resin composition-coated electrical steel sheet immediately after drying was observed by using a polarization microscope with the method described above, and it was determined whether or not a part of the curing agent existed in the adhesive resin composition coating in the crystalline state. As a result, it was confirmed that a part of the curing agent existed in the adhesive resin composition coating in the crystalline state, except for Comparative Example 2, which will be described later.

<Measurement of Light Scattering Intensity>

The adhesive resin composition-coated electrical steel sheet immediately after drying was immersed in chloride, a steel sheet portion was dissolved, and the adhesive resin composition coating was peeled.
In addition, a cast film was also produced for comparative study. The thermosetting adhesive (4.5 $\mu$m thickness) of each example was applied to a surface (200 × 200 mm) of a 220 × 200 mm 2-axis extension PET film (75 $\mu$m thickness, manufactured by Unitika Ltd.) using a roll coater (produced by Furnace, Co., Ltd.). After the application, the adhesive resin composition-coated electrical steel sheet of each example was dried under the same conditions, and the solvent was removed to form adhesive resin composition coating. Further, after drying, the PET film was put into cooling water and cooled to room temperature, and thereafter the adhesive resin composition coating was peeled from the PET film.

The polarization-resolved light scattering intensity ($I_0$ and $I_1$, respectively, the integration value with a scattering amount of light of 0° to 22° scattering angle) of the adhesive resin composition coating collected from each of the cover glass No. 1 manufactured by Matsunami Glass Ind., Ltd., and the adhesive resin composition-coated electrical steel sheet and the cast film was measured by a light scattering measurement apparatus (PP-1000 produced by Otsuka Electronics Co., Ltd., a distance (L) between the sample and a two-dimensional detector was set to 20 cm). $I=I_1/I_0$ was calculated from the measured values, and used as the polarization-resolved light scattering intensity I of the adhesive resin composition coating. Note that both $I_0$ and $I_1$ were the average values of the three specimens.

Tables 3 to 5 show the polarization-resolved light scattering intensity I of the calculated adhesive resin composition coating. Note that, in the tables, the measured values for the adhesive resin composition coating collected from the adhesive resin composition-coated electrical steel sheet are shown in the column of "steel sheet", and the measured values for the adhesive resin composition coating collected from the cast film are shown in the column of "PET."

<Measurement of Tss, $\lambda$, and $t_0$>

A test specimen was cut out from the adhesive resin composition-coated electrical steel sheet immediately after drying, and was embedded in epoxy resin. When the epoxy resin was cured, it was polished to obtain a smooth steel sheet cross-section. The steel sheet cross-section was observed with a microscope, and the thickness of the adhesive resin composition coating was measured. Further, a $7 \times 7$ mm test specimen was cut out, set to a sample tube for penetration mode of a thermomechanical analysis apparatus (TMA, produced by Hitachi High-Tech Corporation) with an adhesive applied surface facing up, and heated in the penetration mode from -50°C to 300°C at 5°C/minute. Then, the penetration length of the TMA probe needle into the adhesive resin composition coating coated on the steel sheet surface was measured. Tss was obtained based on this data. In addition, based on this data, the maximum value of the needle penetration length was obtained, and $\lambda$ was calculated. The results are shown in Tables 3 to 5.

Further, samples were prepared that were obtained by drying electrical steel sheets with the thermosetting adhesive applied to the surfaces at 140°C with varied drying times, so that the thickness after drying became 4.5 $\mu$m, the needle penetration length into the adhesive resin composition coating was measured in the TMA penetration mode under the same conditions, and the correlation between the drying time and Tss at the time of drying at the temperatures shown in Tables 3 to 5 was determined. Then, from this data, the time $t_0$ at which Tss of the adhesive resin composition coating = 50°C was achieved was determined. The results are shown in Tables 3 to 5.

<Adhesive Blocking Test>

Two $50 \times 50$ mm adhesive resin composition-coated electrical steel sheets immediately after drying were cut out and laminated so that adhesion surfaces are overlapped by $40 \times 50$ mm. The steel sheets laminated at 50°C were pressurized at 8 MPa for 30 minutes. After unloading, the tensile shear bond strength between the adhesion surfaces was measured using a precision spring scale, and was evaluated based on the following evaluation criteria. The greater the adhesive blocking between the adhesion composition resin layers, the greater the tensile shear bond strength. Thus, the adhesive blocking resistance was evaluated with the following grades (prevention effects in the order of A>B>C>D). Measurement was performed 5 times for each.
A: 0.1 kPa or less, B: more than 0.1 kPa and 0.5 kPa or less, C: more than 0.5 kPa and 1 kPa or less, D: more than 1 kPa

<Adhesion Blocking Test>

Two $50 \times 50$ mm adhesive resin composition-coated electrical steel sheets immediately after drying were cut out and laminated so that adhesion surfaces are overlapped by $40 \times 50$ mm. The laminated steel sheets were put into an oven (relative humidity 90%) that is set so that the sheet temperature became 50°C for 12 weeks, while being pressurized at 8 MPa. After 12 weeks, the laminated steel sheets were taken out from the oven and unloaded. After the unloading, the tensile shear bond strength between the adhesion surfaces was measured using a precision spring scale. When adhesion blocking between the adhesion composition resin layers advances during storage, the tensile shear bond strength increases. Thus, the adhesion blocking resistance was evaluated with the following grades (prevention effects in the order of A>B>C>D). Measurement was performed 5 times for each.
A: 0.1 kPa or less, B: more than 0.1 kPa and 0.5 kPa or less, C: more than 0.5 kPa and 1 kPa or less, D: more than 1 kPa

<Short-Time Curing in Thermal Compression Bonding Step>

Two 100 × 25 mm adhesive resin composition-coated electrical steel sheets immediately after drying were cut out and laminated so that adhesion surfaces are overlapped by 25 × 25 mm. The temperature of the laminated steel sheets was raised to 200°C at 5°C/second while being pressurized at 1 MPa, and was held at 200°C for one minute. Then, it was cooled to room temperature, and the tensile shear bond strength was measured compliant with JIS K 6850:1999 (adhesive force immediately after drying). Further, the adhesive resin composition-coated electrical steel sheets stored in the oven at 50°C × 12 weeks (relative humidity 90%) were used to perform a similar tensile shear bond strength test, and the tensile shear bond strength after storage was measured (adhesive force after storage). Measurement was performed 5 times for each.
A: 10 MPa or more, B: 5 MPa or more and less than 10 MPa, C: 1 MPa or more and less than 5 MPa, D: less than 1 MPa

[Table 3]

Tabel 3

| Example | | Example 1 | Example 2 | Example 3 | Example 4 | Example 5 |
|---|---|---|---|---|---|---|
| Thermosetting adhesive | | 1 | 1 | 1 | 1 | 2 |
| Drying condition | Temperature T (°C) | 140 | 140 | 140 | 140 | 140 |
| | Time t (min) | 2.5 | 3.0 | 6.0 | 15 | 40 |
| $t_0$ | | 2.5 | 2.5 | 2.5 | 2.5 | 20 |
| $t/t_0$ | | 1.0 | 1.2 | 2.4 | 6.0 | 2.0 |
| Light Scattering Intensity ($\times 10^7$) | Steel sheet | 48.00 | 19.70 | 7.70 | 2.20 | 1.03 |
| | PET | 50.00 | 18.60 | 7.30 | 2.60 | 1.02 |
| Softening start temperature $T_{ss}$ (°C) | | 45 | 60 | 70 | 75 | 80 |
| Maximum penetration $\lambda$ (%) | | 75 | 75 | 60 | 55 | 15 |
| Adhesive blocking | | B | A | A | A | A |
| Adhesion blocking | | B | A | A | A | A~B |
| Short time curing | Immediately after drying | A~B | A~B | A | A | A |
| | After storage | A~B | A~B | A | A | A~B |

[Table 4]

Table 4

| Example | | Example 6 | Example 7 | Example 8 | Example 9 | Example 10 |
|---|---|---|---|---|---|---|
| Thermosetting adhesive | | 1 | 1 | 5 | 1 | 1 |
| Drying condition | Temperature T (°C) | 140 | 140 | 140 | 140 | 200 |
| | Time t (min) | 20 | 35 | 2.0 | 18 | 2.0 |
| $t_0$ | | 2.5 | 2.5 | 2.5 | 2.5 | 0.5 |
| $t/t_0$ | | 8.0 | 14.0 | 0.8 | 7.2 | 4.0 |
| Light Scattering Intensity ($\times 10^7$) | Steel sheet | 1.55 | 1.48 | 49.00 | 2.10 | 1.09 |
| | PET | 1.60 | 1.40 | 50.00 | 2.20 | 1.10 |
| Softening start temperature $T_{ss}$ (°C) | | 80 | 90 | 60 | 78 | 83 |
| Maximum penetration $\lambda$ (%) | | 25 | 20 | 75 | 35 | 20 |

(continued)

| Example | | Example 6 | Example 7 | Example 8 | Example 9 | Example 10 |
|---|---|---|---|---|---|---|
| Adhesive blocking | | Λ | Λ | Λ | Λ | Λ |
| Adhesion blocking | | Λ | Λ | Λ | Λ | B |
| Short-time curing | Immediately after drying | Λ | Λ | B | Λ | Λ |
| | After storage | A | A | B | A | A~B |

[Table 5]

Table 5

| Example | | Example 11 | Example 12 | Example 13 | Example 14 |
|---|---|---|---|---|---|
| Thermosetting adhesive | | 1 | 3 | 4 | 1 |
| Drying condition | Temperature T (°C) | 230 | 140 | 140 | 140 |
| | Time t (min) | 1.0 | 25 | 8.0 | 40 |
| $t_0$ | | 0.15 | 20 | 5.0 | 2.5 |
| $t/t_0$ | | 6.7 | 1.3 | 1.6 | 16.0 |
| Light Scattering Intensity ($\times 10^7$) | Steel sheet | 1.02 | 2.35 | 6.59 | 1.04 |
| | PET | 1.00 | 2.60 | 7.00 | 1.05 |
| Softening start temperature $T_{ss}$ (°C) | | 90 | 65 | 55 | 80 |
| Maximum penetration λ (%) | | 15 | 75 | 80 | 20 |
| Adhesive blocking | | A | A | A | A |
| Adhesion blocking | | B | A | A | B |
| Short-time curing | Immediately after drying | A | A | A | A |
| | After storage | A~B | A | A | A~B |

<Comparative Examples 1 to 3>

Adhesive resin composition-coated electrical steel sheets were obtained in manners similar to Example 1, except that the thermosetting adhesives and the drying conditions shown in Table 6 were used.
Tss, λ, and the light scattering intensity were measured with a method similar to that in Examples 1 to 14 by using the obtained adhesive resin composition-coated electrical steel sheets, and whether or not short-time curing is possible was further evaluated in an adhesive blocking test, an adhesion blocking test, and the thermal compression bonding step.

[Table 6]

Table 6

| Example | | Comparative Example 1 | Comparative Example 2 | Comparative Example 3 | Comparative Example 4 |
|---|---|---|---|---|---|
| Thermosetting adhesive | | 1 | 1 | 1 | 6 |
| Drying condition | Temperature T (°C) | 140 | 280 | 250 | 200 |
| | Time t (min) | 1.5 | 2.0 | 2.0 | 10 |
| $t_0$ | | 2.5 | 0.05 | 0.1 | 0.48 |

(continued)

| Example | | Comparative Example 1 | Comparative Example 2 | Comparative Example 3 | Comparative Example 4 |
|---|---|---|---|---|---|
| $t/t_0$ | | 0.6 | 40.0 | 20.0 | 20.8 |
| Light Scattering Intensity ($\times 10^7$) | Steel sheet | 60.50 | 0.45 | 0.72 | 0.48 |
| | PET | 60.00 | 0.50 | 0.80 | 0.45 |
| Softening start temperature $T_{ss}$ (°C) | | 30 | 99 | 98 | 95 |
| Maximum penetration $\lambda$ (%) | | 95 | 10 | 13 | 14 |
| Adhesive blocking | | B | A | A | A |
| Adhesion blocking | | C | D | D | D |
| Short-time curing | Immediately after drying | D | C | B | B |
| | After storage | D | D | D | D |

<Comparative Example 4>

According to Example 43 in JP11-162724A, high molecular weight epoxy prepolymer (Mn=6000) was made by using bisphenol A-type epoxy (Epikote 828 manufactured by Mitsubishi Chemical Holdings Corporation). Next, acrylic resin (mass ratio: 174/87/29) consisting of methacrylic acid, styrene, and ethyl acrylate was polymerized. After dissolving 267 parts of high molecular weight epoxy prepolymer and 200 parts of acrylic resin in a solvent, an amine catalyst (diethylaminoethanol) was added and stirred at 105°C for 3 hours. Then, deionized water was added over 30 minutes to obtain an emulsion with a solid content of 25%. Phenol resin (bisphenol A resol-type phenol resin): 5 parts and DICY: 20 parts were added to the emulsion with respect to 100 parts resin in the emulsion to obtain an epoxy emulsion adhesive (a thermosetting adhesive 6). Then, the thermosetting adhesive 6 was applied to a surface of the electrical steel sheet with a bar coater, dried at 200°C for 10 minutes within the sheet temperature range described in paragraph 0057 of Japanese Patent Application Laid-Open described above, and cooled to obtain the adhesive resin composition-coated electrical steel sheet.

Tss, $\lambda$, and the light scattering intensity were measured with a method similar to that in Examples 1 to 14 by using the obtained adhesive resin composition-coated electrical steel sheets, and whether or not short-time curing is possible was further evaluated in an adhesion blocking test and the thermal compression bonding step. As a result, the light scattering intensity was substantially $<1 \times 10^6$, and similar to Comparative Examples 2 and 3, the adhesion blocking resistance and the adhesive force after storage was D.

<Results>

From Examples 1 to 14, the electrical steel sheet coated with the adhesive resin composition coating that consists of the semi-cured material of the adhesive resin composition, and in which the amount of the curing agent crystal is controlled to the predetermined amount can suppress adhesive blocking and adhesion blocking, and can be cured in a short period of time in the thermal compression bonding step to develop adhesive force, even if stored in a high temperature and humidity environment for a long period of time.

On the other hand, from Comparative Example 1, when it deviates from the upper limit of the light scattering intensity, even if thermal compression bonding is performed immediately after drying, sufficient adhesive force cannot be obtained. It is estimated to be the cause that the curing agent crystal remains in the adhesive resin composition coating even after thermal compression bonding. From Comparative Examples 2 to 4, when the light scattering intensity deviates from the lower limit, adhesion blocking occurs during storage, and adhesive force after storage is also decreased. The reason is estimated to be that the curing agent dissolved during drying caused the slow curing reaction during storage. In addition, from Comparative Example 4, even if produced by a known method using a known adhesive, the adhesive resin composition-coated electrical steel sheet of the present invention cannot be easily produced. Furthermore, since it is outside the scope of the constituent elements of the present invention, it can be seen that, as in Comparative Examples 2 and 3, adhesion blocking occurs during storage, and the adhesive strength after storage is also decreased.

From comparison between Examples 1, 2, and 8 and the other examples, when the light scattering intensity is $18.60 \times 10^7$ or more, the adhesive force immediately after drying is slightly low. In addition, in Example 1, 2, and 8, the adhesive force after storage is also slightly low. It is presumed that this is because some curing agent crystals remain in the adhesive resin composition coating even after thermal compression bonding, and this is the starting point for the decrease in strength, leading to a decrease in adhesive strength.

Further, from comparison between Examples 5, 10, 11, and 14 and the other examples, when the light scattering intensity is $1.00 \times 10^7$ to $1.10 \times 10^7$, the adhesion blocking resistance tends to slightly deteriorate. It is estimated to be the cause that the slow curing reaction between the adhesive resin composition coatings progresses during storage, due to the curing agent dissolved in the heating, drying and solidification step.

Further, when Examples 5 and 6 are compared, although Tss is the same, the Example 6 has a better adhesion blocking resistance than Example 5. This is estimated to be due to the following. While $Tg_{uc}$ of the adhesive resin composition 2 used in Example 5 is less than 30°C, $Tg_{uc}$ of the adhesive resin composition 1 used in Example 6 is 30°C or more. As a result, in order to increase Tss to 80°C in the heating, drying, and solidification step, more heat was input in Example 5. As a result, it is estimated that more curing agent was dissolved in the heating, drying, and solidification step in Example 5. Actually, the area ratio of curing agent crystals is also smaller in Example 5. Accordingly, it is estimated that, in Example 5 in which more curing agent was dissolved, the slow curing reaction easily advances during storage, and adhesion blocking resistance was slightly inferior.

In addition, from comparison between Example 1 and Examples 2 to 4, 6, 7, 9, and 14, the adhesive resin composition-coated electrical steel sheet dried at 140°C for less than $1.1 \times t_0$ hours has poor adhesive blocking resistance. This is estimated to be due to the fact that the adhesive resin composition was not sufficiently cured after drying. Further, from comparison between Example 14 and Examples 2 to 4, 6, 7, and 9, the adhesive resin composition-coated electrical steel sheet dried at 140°C within $15.0 \times t_0$ hours has excellent adhesion blocking resistance. It is estimated to be the cause that, when dried for $15.0 \times t_0$ hours or more, the dissolution of the curing agent crystals in the heating, drying, and solidification step progressed, and the slow curing reaction due to the curing agent dissolved during storage progressed.

INDUSTRIAL APPLICABILITY

According to the present invention, an adhesive resin composition-coated electrical steel sheet capable of preventing adhesion blocking and deterioration of adhesion ability even if stored for a long period of time after application/drying of an adhesive, and capable of curing adhesive resin composition coating in a short period of time in a thermal compression bonding step. Therefore, the adhesive resin coating electrical steel sheet of the present invention can be preferably used as a material of an iron core (a stator, a rotor, and the like) for a motor of home appliances (an air-conditioner, a cleaner, an audio, and the like) and an automobile (HV, EV).

**Claims**

1. An adhesive resin composition-coated electrical steel sheet comprising a steel sheet, and adhesive resin composition coating on at least one surface of the steel sheet,

   wherein the adhesive resin composition coating is a semi-cured material of an adhesive resin composition consisting of an adhesive resin at least partly including a thermosetting resin, and a curing agent,
   maximum penetration $\lambda$ of the adhesive resin composition coating at 100 to 300°C measured by thermomechanical analysis described in JIS K 7196:2012 is 3% or more and less than 100%, and
   a part of the curing agent exists in the adhesive resin composition coating in a crystalline state, and polarization-resolved light scattering intensity I of the adhesive resin composition coating is $1.00 \times 10^7$ to $50.00 \times 10^7$.

2. The adhesive resin composition-coated electrical steel sheet according to claim 1,
   wherein the polarization-resolved light scattering intensity I of the adhesive resin composition coating is $1.20 \times 10^7$ to $18.00 \times 10^7$.

3. The adhesive resin composition-coated electrical steel sheet according to claim 1 or claim 2,
   wherein a softening start temperature Tss of the adhesive resin composition coating measured by thermomechanical analysis described in JIS K 7196:2012 is 50°C or more, and a maximum penetration $\lambda$ at 100 to 300°C is 15% or more.

4. The adhesive resin composition-coated electrical steel sheet according to any of claim 1 to claim 3,
   wherein the thermosetting resin contains one or more selected from epoxy resin, acrylic resin, urethane resin, and unsaturated polyester resin.

5. The adhesive resin composition-coated electrical steel sheet according to any of claim 1 to claim 4, wherein the curing agent contains one or more selected from an amine curing agent, an amide curing agent, and an imidazole curing agent.

6. A method for producing the adhesive resin composition-coated electrical steel sheet according to any of claim 1 to claim 4, the method comprising:

an application step of applying a liquid thermosetting adhesive including the adhesive resin and the curing agent to at least one surface of the steel sheet; and
a heating, drying, and solidification step of forming an adhesive resin composition coating on the surface of the steel sheet by heating and thereafter cooling the steel sheet applied with the thermosetting adhesive,
wherein heating temperature in the heating, drying, and solidification step is a temperature T within a temperature range of 100 to 250°C, and
a heating time in the heating, drying, and solidification step satisfies Formula (i) below:

$$0.8 \leq t/t_0 \leq 18.0 \ ... \ (i),$$

note that meaning of each sign in Formula (i) above is as follows:

t: the heating time in the heating, drying, and solidification step; and
$t_0$: time required to form the adhesion resin composition coating whose softening start temperature is 50°C when the thermosetting adhesive is dried at the temperature T.

7. The method for producing the adhesive resin composition-coated electrical steel sheet according to claim 6,

wherein a glass transition temperature $Tg_{uc}$ of the adhesive resin is 30°C or more,
the heating temperature in the heating, drying, and solidification step is the temperature T in a temperature range of 100 to 180°C, and
the heating time in the heating, drying, and solidification step satisfies Formula (ii) below:

$$1.3 \leq t/t_0 \leq 15.0 \ ... \ (ii)$$

note that meaning of each sign in Formula (ii) above is as follows:

t: the heating time in the heating, drying, and solidification step; and
$t_0$: time required to form the adhesion resin composition coating whose softening start temperature is 50°C when the thermosetting adhesive is dried at the temperature T.

8. The method for producing the adhesive resin composition-coated electrical steel sheet according to claim 6 or claim 7, wherein the adhesive resin contains 50 mass percent or more of one or more thermosetting resins selected from epoxy resin, acrylic resin, urethane resin, and unsaturated polyester resin, with respect to a total amount of the adhesive resin.

9. The method for producing the adhesive resin composition-coated electrical steel sheet according to any of claim 6 to claim 8, wherein the curing agent contains one or more selected from an amine curing agent, an amide curing agent, and an imidazole curing agent.

FIGURE 1

Two-dimensional detector

$\theta$

Analyzer
(Receiving-side polarizing filter)

L

Sample

Polarizer
(Emitting-side polarizing filter)

Light source

FIGURE 2

## INTERNATIONAL SEARCH REPORT

| International application No. |
| --- |
| **PCT/JP2023/027379** |

**A.    CLASSIFICATION OF SUBJECT MATTER**

*C09J 7/28*(2018.01)i; *C09J 133/04*(2006.01)i; *C09J 163/00*(2006.01)i; *C09J 167/00*(2006.01)i; *C09J 175/04*(2006.01)i; *C09J 201/00*(2006.01)i; *C23C 26/00*(2006.01)i; *H01F 1/147*(2006.01)i; *H01F 1/18*(2006.01)i; *H01F 27/24*(2006.01)i; *H01F 41/02*(2006.01)i

FI:    C09J7/28; C09J133/04; C09J163/00; C09J167/00; C09J175/04; C09J201/00; C23C26/00 A; H01F1/147 183; H01F1/18; H01F27/24 Q; H01F41/02 B

According to International Patent Classification (IPC) or to both national classification and IPC

**B.    FIELDS SEARCHED**

Minimum documentation searched (classification system followed by classification symbols)

C09J7/28; C09J133/04; C09J163/00; C09J167/00; C09J175/04; C09J201/00; C23C26/00; H01F1/147; H01F1/18; H01F27/24; H01F41/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2-208034 A (KAWASAKI STEEL CORP.) 17 August 1990 (1990-08-17) claim 1, page 2, upper right column, line 17 to lower left column, line 7, page 4, lower left column, lines 6-11, page 5, upper left column, line 13 to page 7, last line, examples 1-6, tables 1-3 | 1-9 |
| A | JP 2-38042 A (KAWASAKI STEEL CORP.) 07 February 1990 (1990-02-07) entire text, all drawings | 1-9 |
| A | JP 7-308990 A (KAWASAKI STEEL CORP.) 28 November 1995 (1995-11-28) entire text, all drawings | 1-9 |
| A | JP 2009-218351 A (NIPPON STEEL CORP.) 24 September 2009 (2009-09-24) entire text, all drawings | 1-9 |
| P, X | WO 2022/270154 A1 (SIKA HAMATITE CO., LTD.) 29 December 2022 (2022-12-29) claims 1-12, paragraphs [0109]-[0112], examples 1-22 | 1-9 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 August 2023** | **12 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/027379**

| Patent document cited in search report | | | Publication date (day/month/year) | Patent family member(s) | Publication date (day/month/year) |
|---|---|---|---|---|---|
| JP | 2-208034 | A | 17 August 1990 | (Family: none) | |
| JP | 2-38042 | A | 07 February 1990 | (Family: none) | |
| JP | 7-308990 | A | 28 November 1995 | (Family: none) | |
| JP | 2009-218351 | A | 24 September 2009 | (Family: none) | |
| WO | 2022/270154 | A1 | 29 December 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002260910 A
- JP 2020100727 A
- JP 2017031268 A
- JP 2014152236 A
- JP 6182296 A
- JP 11162724 A

**Non-patent literature cited in the description**

- *Journal of Japan Adhesion Society*, 2017, vol. 53 (4), 122-128